# EUROPEAN PATENT APPLICATION

(11) **EP 1 553 766 A2**
(43) Date of publication of application: **13.07.2005**
(21) Application number: 05100065.1
(22) Date of filing: 06.01.2005
(51) Int. Cl.: H04N 5/445

(54) **Portable combination apparatus having a clock display function**

(30) Priority: 06.01.2004 KR 2004000695
(71) Applicant: SAMSUNG ELECTRONICS CO., LTD., Suwon-Shi, Gyeonggi-Do 442-742 (KR)
(72) Inventor: Park, Hong-joon, Seoul (KR); Jeon, Il-joong 512-1001, Jinsan-maeul, Yongin-si Gyeonggi-do (KR)
(74) Representative: Geary, Stuart Lloyd

(57) **Abstract**

A portable combination apparatus having a clock display function, and a clock display method thereof. A portable combination apparatus with a clock display function has an operation part with a plurality of operation buttons, a display part for displaying current time information, and a control part for controlling such that the current time information is displayed on the display part upon selection of a predetermined operation button among the plurality of operation buttons. Accordingly, a larger clock can be displayed through a LCD of the portable combination apparatus. Accordingly, either by carrying the portable combination apparatus, or placing the apparatus on a desk or table, the user can use the portable combination apparatus also as a clock. By forming the clock display button in a location that can be easily, recognized, remembered, found, and pressed by the user, the user can conveniently check the clock.

## Description

The present invention relates to portable combination apparatus comprising a display screen and control means.

A portable combination apparatus generally consists of a variety of devices with different functions such as camcorder, digital camera, MP3 player, voice recorder, data storage and web camera functions, all in a compact unit that can be carried around by a user. Portable combination apparatuses have been greatly improved by highly advanced digital technology that has been incorporated in image processing apparatuses such as camcorders.

A conventional digital camera or digital camcorder offers the function of current time setting or displaying of current time on a liquid crystal display (LCD) during image or image reproducing. However, this requires the operator's pressing of a display menu button and the current time is usually displayed together with information about the operational status of the device. In other words, the current time is not usually displayed using the entire screen of the LCD.

Accordingly, a need exists for a portable combination device that is capable of displaying the current time in an easy to read format and on demand.

The present invention has been developed in order to solve the above drawbacks and other problems associated with the conventional art and to provide advantages that will be apparent.

An apparatus, according to the present invention, is characterised in that the control means is configured for displaying the current time on the display screen.

The apparatus may include still and/or moving image capturing means. The control means may then be configured for displaying images, during or after capture by the image capturing means, on the display screen.

An aspect of the present invention is to provide a portable combination apparatus and a clock display method thereof, which can display current time information by using a shortcut button.

An apparatus according to the present invention may include a button with the control means being responsive to operation of the button to display the current time on the display screen.

An apparatus according to the present invention may include a group of buttons, one of which is larger than the others with the control means being responsive to operation of the largest button to display the current time on the display screen.

Preferably, the control means is configured to display said current time using most of the height and/or the width of the display screen.

According to the present invention, there is also provided a table clock comprising an apparatus according to the present invention and a cradle for supporting said apparatus with its display screen viewable.

Embodiments of the present invention will now be described, by way of example, with reference to the accompanying drawings, in which:
Figure 1A is a perspective view showing the front and the right side of a portable combination apparatus according to the present invention;
Figure 1B is a perspective view illustrating the bottom of the portable combination apparatus shown in Figure 1A;
Figure 1C is a perspective view showing the back and the left side of the portable combination apparatus shown in Figure 1A;
Figure 2 is a block diagram of an electronics of the portable combination apparatus shown in Figure 1A;
Figure 3A is a perspective view showing the front of a cradle for the portable combination apparatus shown in Figure 1A;
Figure 3B is a perspective view showing the back of the cradle shown in Figure 3A;
Figure 3C is a view illustrating the portable combination apparatus shown in Figure 1A mounted in the cradle shown in Figure 3A;
Figure 4 is a block diagram provided for the explanation of a clock display function of the portable combination apparatus of Figure 1A;
Figure 5 is a flowchart illustrating a clock display method according to the present invention;
Figures 6A and 6B illustrate clocks displayed on an LCD using the clock display method shown in Figure 5;
Figure 7 is a flowchart provided for the explanation of a clock display method upon mounting on a cradle according to the present invention;
Figures 8A to 8E are views provided for the explanation of a menu screen which is provided in the process of setting clock display function when the apparatus is mounted on the cradle according to an embodiment of the present invention; and
Figures 9A and 9B are views illustrate examples in which a clock is displayed on an LCD with the portable combination apparatus mounted in the cradle.

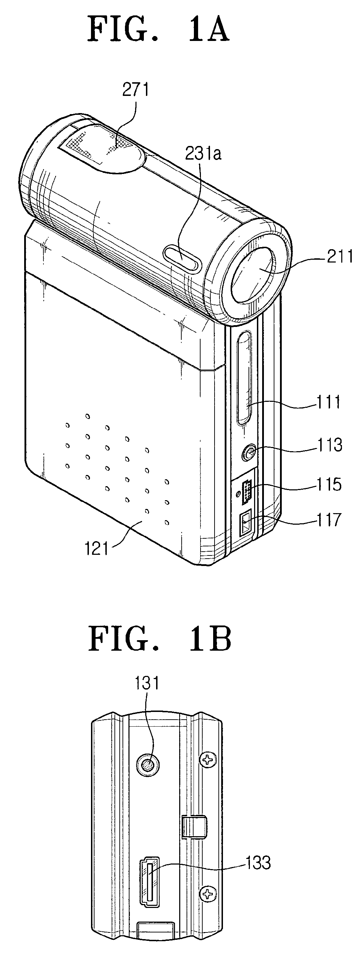

Referring to Figure 1A, a portable combination apparatus comprises on its front, a lens unit 211 for capturing images, a remote controller signal receiving unit 111 for receiving signals from a remote controller, an earphone terminal 113 for connecting an earphone, a USB terminal 115 for serial communication with a PC or a printer and a power supply cable connection terminal 117 for receiving external power from a power supply (not shown).

As mentioned above, a portable combination apparatus usually has the terminals for connecting to the external devices on its front. The portable combination apparatus also has on its right side a photo button 231a for capturing still images, and a battery cover 121 for covering battery received in the apparatus. Additionally, there is a microphone 271 provided on the top of the portable combination apparatus for receiving external audio signals.

Referring to Figure 1B, the portable combination apparatus has, on its bottom, a tripod fixing unit 131 for connecting a tripod and a cradle connecting terminal 133 for receiving power and video signals through a cradle (not shown).

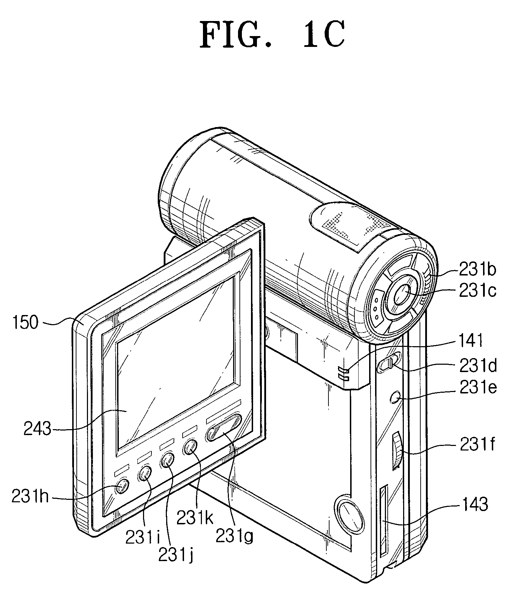

Operation buttons provided at the outside of the portable combination apparatus will now be described with reference to Figure 1C.

Referring to Figure 1C, for the convenience of the operator, most of the operation buttons are provided on the back of the portable combination apparatus or on its the LCD panel 150.

The portable combination apparatus has, on its back, a zoom switch 231b for zooming the lens unit 211 in and out, a photographing button 31c for capturing moving images, an operation mode selection switch 231d for set the operation mode, such as recording, reproducing or power-off, of the portable combination apparatus, a menu button 231e for displaying a sub-menu screen of the selected operation mode on an LCD 243, and a menu dial 231f for moving a cursor to menu items on menu screens displayed on the LCD 243 and selecting the menu item on which the cursor is placed.

Additionally, the portable combination apparatus has, on its back, a memory card connecting unit 143 for the mounting of a memory card and an indicating lamp 141. The indicating lamp 141 may comprise a power lamp and a recharge lamp. The power indicating lamp is preferably green in color. The power lamp is on when the portable combination apparatus is turned on. The recharge lamp is orange, for instance, when the battery of the portable combination apparatus is being charged, and then turns green when the recharging operation is complete.

On the LCD panel 150, which is movably engaged with respect to the portable combination apparatus, there is provided an LCD 243 on which scene being captured, reproduced images or menus screens are displayed, a mode button 231g, which displays the sub-menu screen of the selected operation mode on the LCD 243, a rewind button 231h ( 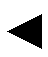 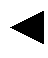 ), a fast forward button 231i ( 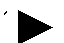 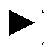 ), a play/pause button 231j ( 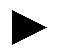 ∥), and a stop button 231k (■).

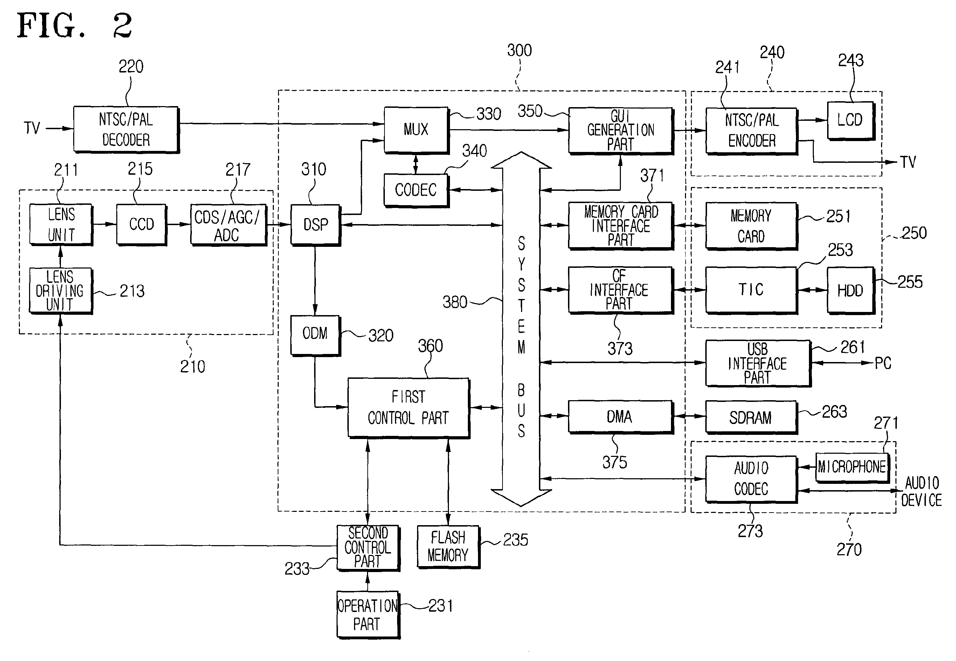

Referring to Figure 2, the portable combination apparatus comprises a photographing unit 210, a National Television System Committee/Phase Alternation Line (NTSC/PAL) decoder 220, an operation unit 231, a second controlling unit 233, a flash memory 235, a display unit 240, a storage unit 250, a Universal Serial Bus (USB) interface unit 261, a Synchronous Dynamic Random Access Memory (SDRAM) 263, an audio signal processing unit 270 and a main controlling block 300.

The photographing unit 210 photoelectrically converts optical signals entering through the lens into electrical signals and processes them. The photographing unit 210 has a lens unit 211, a lens driving unit 213, a Charge Coupled Device (CCD) 215 and a Correlated Double Sampler/Auto Gain Controller/Analog-to-Digital converter (CDS/AGC/ADC) 217.

The lens driving unit 213 drives the lens unit 211 under the control of the second controlling unit 233. More specifically, the lens driving unit 213 drives the lens unit 211 to zoom in and out, automatically adjusts focal point and adjusts aperture of an iris (not shown) which is provided in the lens unit 211.

The CCD 215 converts optical images, coming through the lens unit 211, into electric signals and outputs the electrical signals. More specifically, an optical image of the subject of photography is formed on the CCD 215, and the CCD 215 converts the optical image into an electric signal and outputs an one-dimensional electric signal using vertical and horizontal interlacing.

The CDS/AGC/ADC 217 removes noise from the signals output from the CCD 215 using a correlated double sampling circuit, adjusts the gain to maintain the signal level using an auto gain controlling circuit and converts the signal into digital signal using an A/D converter.

The NTSC/PAL decoder 220 digitizes NTSC or PAL signals which are input through a video line input terminal (not shown), and sends the converted signal to the main controlling block 300. Both NTSC and PAL are TV standards. South Korea has adopted NTSC as its TV standard. PAL is generally used in European countries.

The main controlling block 300 compresses digital signals supplied from the photographing unit 210, the NTSC/PAL decoder 220 and the USB interface unit 261 into a predetermined format data, and stores it in the storage unit 250. The main controlling block 300 also decompresses stored data from the storage unit 250 for supply to the indicating unit 240. Data supplied from the audio signal processing unit 270 can be stored in the storage unit 250 and the stored data can be supplied to the audio signal processing unit 270. Additionally, the main controlling block 300 can control the overall operation of the internal components and is provided in a single chip for the sake of compactness.

The main controlling block 300 comprises a digital signal processor (DSP) 310, an optical detection module (ODM) 320, a multiplexer (MUX) 330, a CODEC 340, a graphical user interface (GUI) generating unit 350, a first controlling unit 360, a memory card interface unit 371, a compact flash (CF) interface unit 373, a direct memory access (DMA) 375, and a system bus 380.

The DSP 310 processes the digital signal from the photographing unit 210, and supplies the processed signal to the MUX 330 or the system bus 380. The DSP 310 also separates the digital signal from the photographing unit 210 into a luminance signal Y and a chrominance signal C, and supplies the same to the ODM 320.

The ODM 320 generates ODM data, which is control information, based on the Y and C signals from the DSP 310, and outputs the ODM data to the first controlling unit 360. More specifically, the ODM data is auto exposure (AE) data for optimizing the light amount incoming to the CCD 215, and comprises auto focus (AF) data for automatically focusing the focus lens, and auto white balance (AWB) data for automatically compensating for color shift due to color temperature of the light source.

The MUX 330 supplies signals output from the DSP 310 and from the NTSC/PAL decoder 220 to either the CODEC 340 or the GUI generating unit 350.

The CODEC 340 compresses the incoming data, and decompresses the data as necessary. More specifically, the CODEC 340 compresses the motion picture data using into MPEG4 format, while compressing the still image data into JPEG format.

The graphical user interface (GUI) generating unit 350 stores graphic data for the establishment of a GUI environment such as a menu screen. The GUI generating unit 350 can combine menu screens with the image output from the MUX 330 according to the control signals from the first controlling unit 360. A menu screen is a graphic screen provided for the convenience of the user during selection of functions of the portable combination apparatus.

The first controlling unit 360 is a 32-bit reduced instruction set computing (RISC) processor which controls the overall operation of the main controlling block 300. More specifically, the first controlling unit 360 controls the operation of the CODEC 340 and the GUI generating unit 350, and transfers the AE data and AF data of the ODM data received from the ODM 320, to the second controlling unit 233.

In addition, the first controlling unit 360 may interface with a variety of external devices via the system bus 380. The system bus 380 is connected with a memory card interface 371 for interface with the memory card 251, a CF interface 373 for interface with a HDD 255 via a TIC 253, and a USB interface 261 for interface with external devices such as PC or printer, and also connected to a DMA 375 and an audio signal processing unit 270.

The operation unit 231 is a user interface device to receive operation commands in connection with the function selection and operation control of the portable combination apparatus. The operation unit 231 has, as described above with reference to Figure 1C, the photo button 231a, the zoom switch 231b, the photographing button 231c, the operation mode selecting switch 231d, the menu button 231e, the menu dial 231f, and the mode button 231g.

The second controlling unit 233 receives operation commands related to function selection and operation control from the user via the operation unit 231, and transfers the received commands to the first controlling unit 360. The second controlling unit 233 controls the lens driving unit 213 based on the AE and AF data received from the first controlling unit 360.

The flash memory 235 stores therein system programs necessary for the first controlling unit 360 for the operation of the apparatus, such as a booting program, important data that should be kept even in the event of power-off, and various application programs.

The indicating unit 240 displays the image, which is output from the main controlling block 300. To this end, the indicating unit 240 has a NTSC/PAL encoder 241 and a liquid crystal display (LCD) 243.

The NTSC/PAL encoder 241 converts the video signal from the main controlling block 300 into NTSC or PAL video signal, and supplies the converted signal to any external devices, such as TV. Video signals from the main controlling block 300 are passed unconverted to the LCD 243.

The LCD 243 is a display device through which images supplied from the NTSC/PAL encoder 241 are displayed.

The storage unit 250 stores therein image data from the main controlling block. To this end, the storage unit 250 preferably comprises a memory card 251, the transition integrated circuit (TIC) 253 and the HDD 255.

The memory card 251 is a recording medium in which image data from the main controlling block 300 is stored. The memory card 251 can be formed as a removable IC memory card, which can be conveniently installed and removed with respect to the portable combination apparatus.

The TIC 253 is used to provide a compact flash interface between the CF interface 373 and the HDD 255. The TIC 253 facilitates the high compatibility between the portable combination apparatus and other devices. In other words, the HDD 255 is changed to compact flash interface via the TIC 253, and connected to the main controlling block 300.

The HDD 255 is a recording medium which stores image data from the main controlling block 300.

The USB interface 261 interfaces with external devices such as PC or printer. The SDRAM 263 operates as a buffer which stores therein necessary data for the operation of the portable combination apparatus.

The audio signal processing unit 270 processes an audio signal input from outside, and supplies the processed signal to the main controlling block 300. The audio signal processing unit 270 also processes an audio signal received from the main controlling block 300, and outputs the processed signal to the external audio device. To this end, the audio signal processing unit 270 has a microphone 271 and an audio CODEC 273.

The microphone 271 converts external audio signals into electric signals.

The audio CODEC 273 digitizes the analog signal received from the microphone 271 or the external audio device, compresses the digitized signal into data with a predetermined format, and supplies the data to the main controlling block 300. In addition, the audio CODEC 273 decompresses the compressed data received from the main controlling block 300, converts it into an analog signal, and sends it out to the external audio device for reproduction.

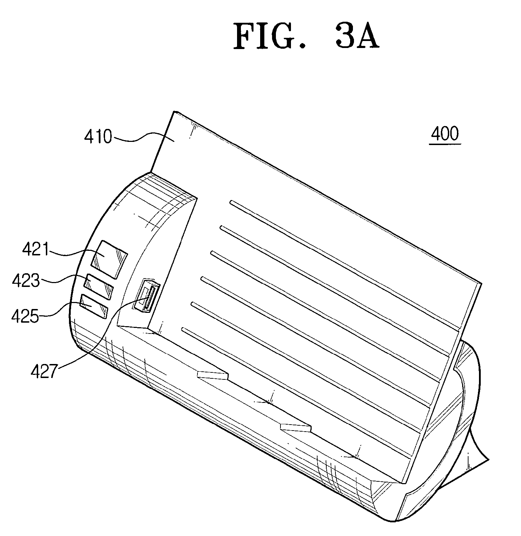

The structure and operation of the cradle will now be described with reference to Figures 3A through 3C.

Referring to Figure 3A, the cradle 400 has a steeply sloping support plate 410 for supporting the portable combination apparatus. A power button 421 for selecting power on and off of the portable combination apparatus, a menu button 423 for displaying menu screen on the LCD 243 of the portable combination apparatus, a remote control signal receiving part 425 for receiving signal from a remote controller, and a portable combination apparatus connection terminal 427. The portable combination apparatus connection terminal 427 connects to the cradle connecting terminal 133 of the portable combination apparatus to supply power to the portable combination apparatus, and allows the transfer of input images from an external device.

The supporting plate 410 may be made of transparent acrylic, with a LED (not shown) attached to one side of the transparent acryl so that the light from the LED can pass through the acryl. The LED can emit different colors of light depending on the current operation mode. For example, the LED may emit red light when the portable combination apparatus is on, orange light when the portable combination apparatus is recharging and blue light when the portable combination apparatus has finished recharging.

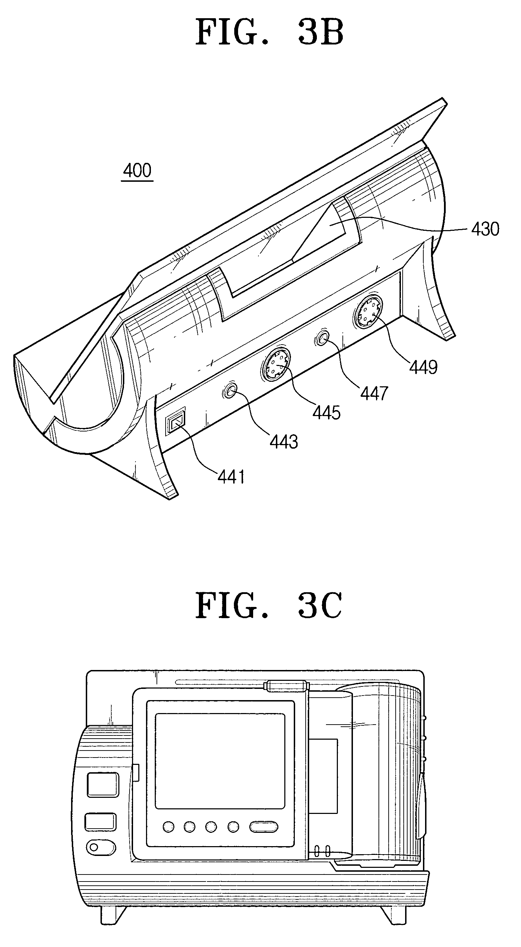

Referring to Figure 3B, the cradle 400 has, at its back, a battery slot 430 for mounting a battery for recharging thereof, a power supply cable connecting terminal 441 for supplying power through a power supply device (not shown), an AV output terminal 443, a super video image output terminal 445, an AV input terminal 447 and a super video image input terminal 449.

Figure 3C illustrates one example in which the portable combination apparatus is seated on the cradle 400 according to an embodiment of the present invention.

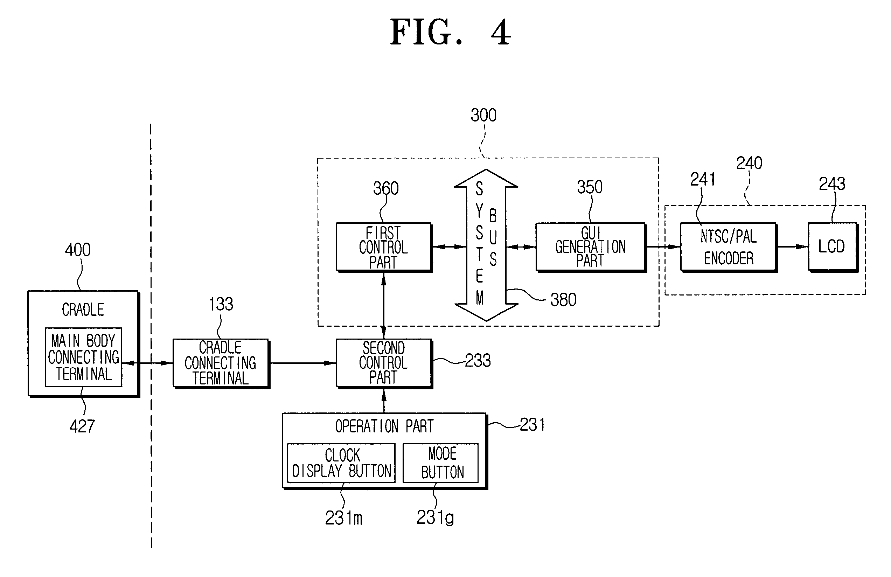

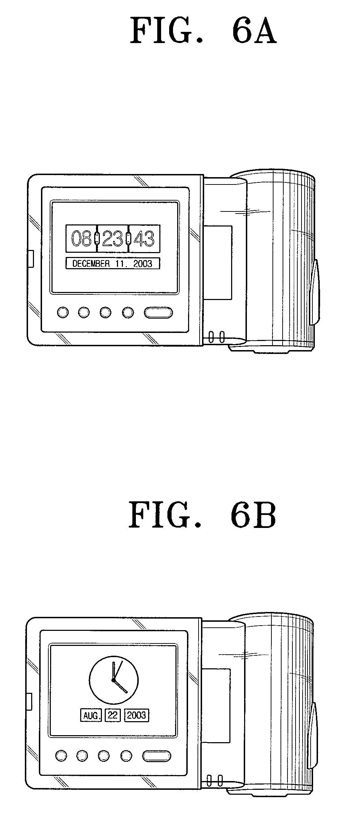

Referring now to Figures 4 through 6B, a clock display function of the portable combination apparatus as shown in Figure 2, will now be described in greater detail below.

For the convenience of explanation, Figure 4 just shows the modules for the clock display function from among the modules illustrated in Figure 2. Figure 4 additionally shows the cradle connecting terminal 133 and the cradle 400 which are not shown in Figure 2. Also, there are a clock display button 231m and a mode button 231g of the operation unit 231 as additionally illustrated in Figure 4.

The clock display button 231m of the operation unit 231 is used to input a clock display command and the mode button 231g is used to input a clock display command or a menu screen display command for the selected operation mode.

The buttons 231m and 231g may be selectively used to input the clock display command. However, the use of operation buttons 231m and 231g is for exemplary purpose only and alternative input means are also possible. For example, if the number of buttons is reduced, the size of the portable combination apparatus can be reduced. Therefore, the clock display button 231m may be omitted, and the mode button 231g may be used for the input of a clock display command.

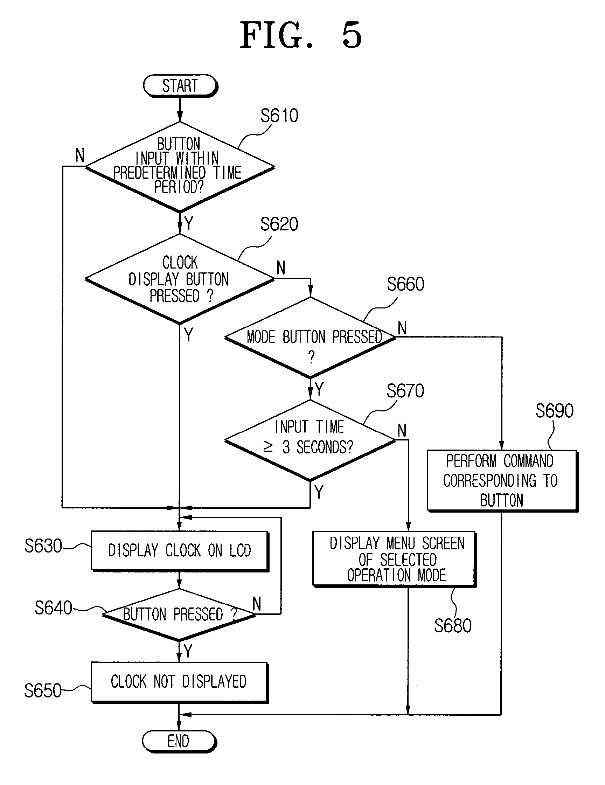

Referring to Figure 5, first, the second control part 233 determines whether any input of operation button is made through the operation part 231 (step S610).

When a command is input via the operation button in step S610, the second control part 233 determines whether the input operation button corresponds to the clock display button 231m or not (step S620).

If it is determined in step S620 that the clock display button 231m has been pressed, the second control part 233 notifies the result to the first control part 360 and, accordingly, the first control part 360 controls the GUI generation part 350 through the system bus 380 such that the clock screen generated from the GUI generation part 350 can be displayed on the LCD 243 through the NTSC/PAL encoder 241 (step S630). Referring to Figures 6A and 6B, the displayed clock may take analogue or digital form, which can be easily selected by the user in advance. In addition to current time information, it is also possible to display information such as the date.

The clock display button 231m is preferably provided on the LCD panel 150 and is preferably bigger than the other operation buttons provided on the LCD panel 150.

The user can hold the portable combination apparatus in hand or put the apparatus in a pocket, and frequently check the time using clock displayed on the apparatus. For the convenience of the user, it is preferable that the clock display button 231m is provided at a location easily recognizable by the user and easily pressed by the user. Therefore, the clock display button 231m may be located at the uppermost, lowermost, leftmost, or rightmost part of the LCD panel 150, which are relatively easy for the user to find.

Next, as the user presses a certain operation button (step S640), the corresponding operation needs be executed and for the execution of the operation, the clock on the LCD 243 is no longer displayed (step S650).

If it is determined in S620 that the pressed operation button is other than the clock display button 231m, the second control part 233 determines whether the input operation button is mode button 231g (step S660).

If it is determined in step S660 that mode button 231g was pressed, the second control part 233 determines whether the mode button 231g has been consecutively pressed for 3 or more seconds (step S670).

If it is determined in S670 that the mode button 231g is consecutively input at least for 3 seconds in S670, the operation at S630 is executed and therefore, the clock is displayed on the LCD 243.

If the mode button 231g is determined to have been input less than 3 seconds in S670, the mode button 231g performs its original function therefore, and as a result, the menu screen corresponding to the selected operation mode is displayed on the LCD 243 (step S680).

Meanwhile, one of the important factors for the manufacture of a portable combination apparatus is that there is a limit to the number of operation buttons in order to keep the product compact. Therefore, in the present embodiment, the mode button 231g performs multiple tasks such that when the mode button 231g is pressed for a short period of time, it is perceived as a menu display command, while if pressed longer period of time, it is perceived as a clock display command.

The mode button 231g is used most often of the buttons on the LCD panel 150 in the present embodiment. It is because, the mode button 231g is the largest of the buttons, and located at the rightmost side so that the user can easily find, remember and press the button.

Meanwhile, if it is determined in the operation at S660 that the input operation button is other than the mode button 231g, the second control part 233 transfers the input operation command through the operation part 231 to the first control part 360, and therefore, the first control part 360 performs corresponding operation (step S690).

If it is determined that no operation button has been pressed for a predetermined time period during the operation at step S610, the operation of step S630 is performed and therefore, the clock is displayed on the LCD 243. The above process particularly applies to when the clock is displayed on the screen as a screen saver.

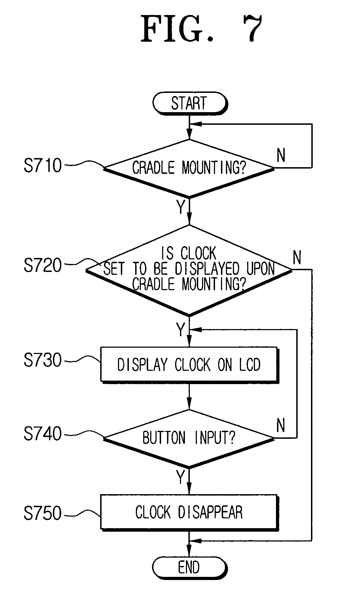

The clock display function, with the portable combination apparatus seated in the cradle, will be described in greater detail with reference to Figures 7 through 9B.

Referring to Figure 7, first, the second control part 233 determines whether the portable combination apparatus is seated with respect to the cradle 400 or not. That is, the second control part 233 determines as to whether the cradle connecting terminal 133 of the portable combination apparatus is connected to the main body connecting terminal 427 of the cradle 400 (step S710).

A certain devoted port can be used in the second control part 233 to determine the mounting of the portable combination apparatus with respect to the cradle 400. More specifically, if the main body connecting terminal 427 and the cradle connecting terminal 133 are not connected to each other, the certain port of the second control part 233 receives a HIGH logic level, and if the two terminals 427 and 133 are connected with each other, a LOW logic level is applied to the certain port. In this way, the mounting of the portable combination apparatus with respect to the cradle 400 may be determined.

In step S710, if it is determined that the portable combination apparatus is seated with respect to the cradle 400, the second control part 233 transfers the result of determination to the first control part 360, and accordingly, the first control part 360 determines whether it is in 'clock-display-upon-cradle-mounting' mode. This mode will be described later in greater detail below.

The portable combination apparatus provides the user with a menu screen by using the GUI, which enables the user to select functions and set environments through the menu screen. More specifically, the user may call for a sub-menu screen of the currently selected operation mode by pressing the mode button 231g, or call for a sub-menu screen of the selected operation mode by pressing the menu button 231e. The user may rotate the menu dial 231f upward and downward, or use the rewind button 231h and fast-forward button 231i to move the cursor up or down with respect to the menu screen and place the cursor on a desired location. The user may then select or execute the menu at the location where the cursor is placed, by pressing the menu dial 231f or play/stop button 231j.

The operation command from the user is transferred to the first control part 360 via the second control part 233, and the first control part 360 controls the GUI generation part 350 via the system bus 380 according to the received operation command. The GUI generation part 350 combines the corresponding menu screen with the image received from the MUX 330, and sends the combined image to the NTSC/PAL encoder 241, and accordingly, the NTSC/PAL encoder 241 displays the menu screen image on the LCD 243.

Briefly, the menu screen is displayed through the LCD 243 according to the operation command input by the user through the operation part 231, and in this description, the process of transferring the user operation command to the first control part 360, the process of the GUI generation part 350 combining the menu screen with the image in accordance with the control of the first control 360, and the process of the NTSC/PAL encoder 241 displaying the menu screen image through the LCD 243, will be omitted for the sake of brevity.

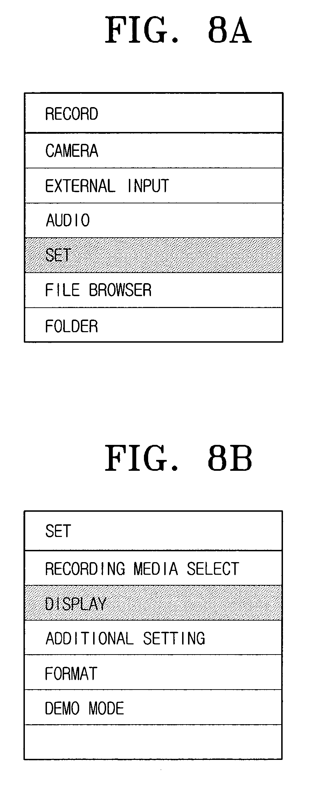

When the user places the operation mode selection switch 231d on 'record' or 'reproduce' mode and presses the mode button 231g, the menu screen corresponding to the 'record' or 'reproduce' mode is displayed through the LCD 243, and Figure 8A shows one example of the 'record' menu screen on the LCD 243.

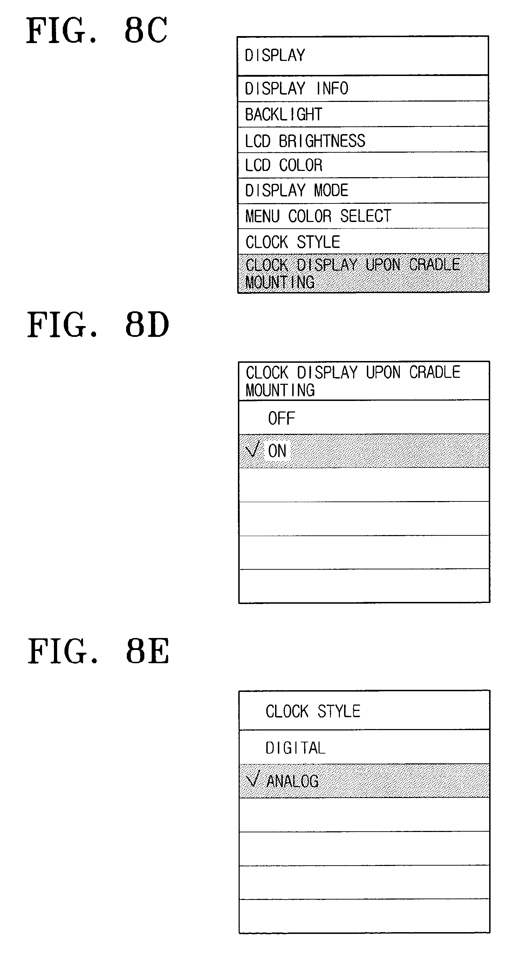

Next, as the user selects the 'set' menu item and selects the 'display' menu item from the 'set' menu screen as shown in Figure 8B, a 'display' menu screen as shown in Figure 8C is displayed. The user then selects 'display-clock-upon-cradle-mounting' menu item from the displayed 'display' menu screen, and selects the 'on' menu item from the screen corresponding to the 'display-clock-upon-cradle-mounting' menu as shown in Figure 8D. As a result, the 'display-clock-upon-cradle-mounting' mode is set.

The steps after step S720 will now be described with reference to Figure 7.

If it is determined at step S720 that the 'display-clock-upon-cradle-mounting' mode is set, the first control part 360 controls the GUI generation part 350 via the system bus 380 such that a clock screen generated by the GUI generation part 350 can be displayed on the LCD 243 through the NTSC/PAL encoder 241 (step S730).

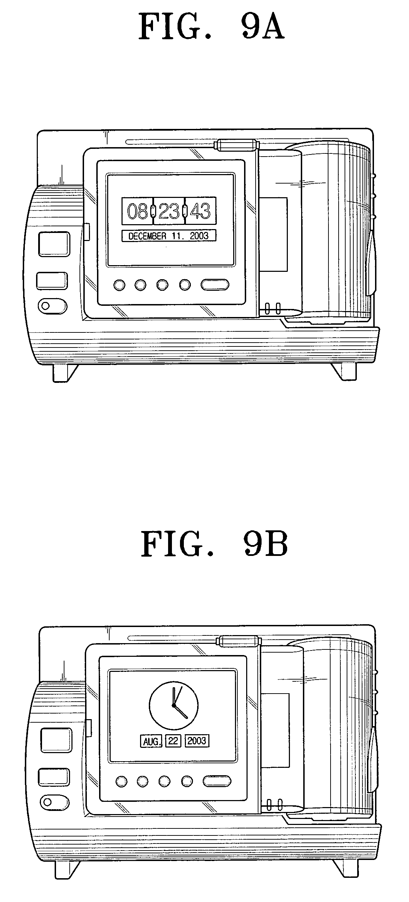

The clock can take analog or digital form, and it can be selected by the user in advance. The user may set the form of the displayed clock by using the 'clock style' menu screen as shown in Figure 8E, which is displayed upon selecting of 'clock style' menu item from the 'display' menu screen as shown in Figure 8C. Figures 9A and 9B illustrate an example where the clock is displayed through the LCD 243.

After that, when the user inputs any operation button (step S740), in order to perform the command corresponding to the operation button, the clock is no longer displayed on the LCD 243 (step S750).

After the operation S750, the user may have the clock displayed through the LCD 243 again, by using either the clock display button 231m or the mode button 231g. It is also possible that the clock can be displayed as a screen saver when there is no input via an operation button for a certain period of time.

Meanwhile, in this particular embodiment of the present invention, the GUI generation part 350 and the second control part 233 are separately provided to reduce the load on the first control part 360. However, this is not necessary. For example, if a high speed processor is used as the first control part 360, the first control part 360 may perform the operations of the GUI generation part 350 and the second control part 233, so that the GUI generation part 350 and the second control part 233 can be omitted.

The clock size can be large enough to be displayed across substantially all of the LCD of a portable combination apparatus. Because a portable combination apparatus is usually of a small enough size to be safely put into the pocket of the user, the portable combination apparatus can be, like a mobile phone, conveniently used as a clock. Furthermore, by forming a clock display button at a location that can be easily found, remembered, and recognized by the user, the user can conveniently select the clock display function whenever time information is required. Additionally, because clock screen can be automatically displayed during the screen saver mode or upon mounting on the cradle, the convenience to the user increases.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A portable combination apparatus comprising a display screen (243) and control means (233, 360), **characterised in that** the control means (233, 360) is configured for displaying the current time on the display screen (243).

2. An apparatus according to claim 1, including still and/or moving image capturing means (210), wherein the control means (233, 360) is configured for displaying images, during or after capture by the image capturing means (210), on the display screen (243).

3. An apparatus according to claim 1 or 2, including a button (231g), wherein the control means (233, 360) is responsive to operation of the button (231g) to display the current time on the display screen (243).

4. An apparatus according to claim 3, including a group of buttons (231g,..., 231k), one (231g) of which is larger than the others (231h, ..., 231k), wherein the control means (233, 360) is responsive to operation of the largest button (231g) to display the current time on the display screen (243).

5. An apparatus according to any preceding claim, wherein the control means (233, 360) is configured to display said current time using most of the height and/or the width of the display screen (243).

6. A table clock comprising an apparatus according to any preceding claim and a cradle (400) for supporting said apparatus with its display screen (243) viewable.

7. A portable combination apparatus, comprising:
an operation part comprising a plurality of operation buttons;
a display part for displaying current time information; and
a control part for controlling operations of the portable combination apparatus such that the current time information is displayed on the display part upon selection of a predetermined operation button from among the plurality of operation buttons.

8. The portable combination apparatus of claim 7, wherein the predetermined operation button is the largest of the plurality of operation buttons of the operation part.

9. The portable combination apparatus of claim 7, wherein the predetermined operation button is located at one of an uppermost, a lowermost, a leftmost, and a rightmost parts or any combination thereof of the operation part.

10. The portable combination apparatus of claim 7, wherein the operation part and the display part are provided at a single panel.

11. The portable combination apparatus of claim 7, wherein the control part controls operations of the portable combination apparatus such that the current time information is displayed on the display part when the predetermined operation button is selected continuously for more than a first time period.

12. The portable combination apparatus of claim 7, wherein the control part controls operations of the portable combination apparatus such that the current time information is displayed on the display part when there is no selection of the operation buttons for a second time period.

13. The portable combination apparatus of claim 7, further comprising a connecting part which is connectible to and disconnectible from an external power supply device, and the control part controls operations of the portable combination apparatus such that the current time information is displayed on the display part when the connecting part is connected to the external power supply device.

14. The portable combination apparatus of claim 7, wherein the current time information is displayed on the display part either in an analog clock form or a digital clock form.

15. The portable combination apparatus of claim 14, wherein the display part further displays at least one of the current year, month, date and day.

16. A clock display method of a portable combination apparatus having a plurality of operation buttons, the method comprising:
a) selecting one of the plurality of operation buttons; and
b) displaying a current time information when a predetermined operation button is selected from among the plurality of operation buttons.

17. The clock display method of claim 16, wherein the predetermined operation button is the largest of the plurality of operation buttons of the operation part.

18. The clock display method of claim 16, wherein the predetermined operation button is located at one of an uppermost, a lowermost, a leftmost, and a rightmost parts or a combination thereof of the operation part.

19. The clock display method of claim 16, wherein in step b), the current time information is displayed when the predetermined operation button is selected continuously for more than a first time period.

20. The clock display method of claim 16, wherein in step b), the current time information is displayed when there is no selection of the operation buttons for a second time period.

21. The clock display method of claim 16, further comprising:
detecting a connection with an external power supply device; and
displaying the current time information if detecting the connection to the external power supply device.

22. The clock display method of claim 16, wherein the current time information is displayed either in an analog clock form or a digital clock form.

23. The clock display method of claim 22, wherein in step b), at least one of current year, month, date and day is further displayed.
